# FASCICULE DE BREVET EUROPEEN

(11) **EP 0 861 218 B1**
(45) Date de publication et mention de la délivrance du brevet: **03.01.2001**
(21) Numéro de dépôt: 96934904.2
(22) Date de dépôt: 14.10.1996
(51) Int. Cl.: C04B 35/573, C04B 41/50

(54) **PROCEDE POUR L'INTRODUCTION DANS DES SUBSTRATS POREUX D'UNE COMPOSITION EN FUSION A BASE DE SILICIUM**
VERFAHREN ZUM EINBRINGEN EINER GESCHMOLZENEN ZUSAMMENSETZUNG AUF DER BASIS VON SILICIUM IN PORÖSE SUBSTRATE
METHOD FOR DELIVERING A MOLTEN SILICON COMPOSITION INTO POROUS SUBSTRATES

(30) Priorité: 14.11.1995 FR 9513458
(43) Date de publication de la demande: 02.09.1998
(73) Titulaire: SOCIETE NATIONALE D'ETUDE ET DE CONSTRUCTION DE MOTEURS D'AVIATION -Snecma, F-75015 Paris (FR)
(72) Inventeur: REY, Jacques, F-33700 Merignac (FR); LAXAGUE, Michel, F-33200 Bordeaux-Cauderan (FR); BERNARD, Bruno, F-33600 Pessac (FR)
(74) Mandataire: Joly, Jean-Jacques
(86) Numéro de dépôt international: FR9601598
(87) Numéro de publication internationale: WO9718176

(56) Documents cités:
- EP-A- 0 093 532
- EP-A- 0 636 700
- GB-A- 2 137 974
- US-A- 4 572 848
- US-A- 5 324 692

## Description

La présente invention concerne un procédé pour l'introduction dans des substrats poreux d'une composition en fusion à base métallique.

Par composition à base métallique, on entend plus particulièrement ici une composition comprenant un ou plusieurs métaux ayant de préférence une température de fusion inférieure à 2000°C et capables de former des carbures réfractaires ayant une température de fusion supérieure à 2200°C. Ces métaux sont notamment le silicium, le titane, le zirconium, l'hafnium et le vanadium.

### Application de l'invention

Un domaine particulier d'application est l'introduction d'une composition à base métallique, et notamment à base de silicium élémentaire métallique (ci-après, composition à base Si) dans des substrats en matériau composite, notamment en matériau composite thermostructural.

Les matériaux composites thermostructuraux sont caractérisés par des propriétés mécaniques qui les rendent aptes à constituer des pièces de structures et par leur capacité à conserver ces propriétés à des températures élevées. Ils sont constitués par une texture fibreuse de renfort en fibres réfractaires densifiée par une matrice réfractaire. Des matériaux composites thermostructuraux bien connus sont les composites carbone-carbone, ou C-C (texture de renfort en fibres de carbone et matrice en carbone) et les composites à matrice céramique, ou CMC (texture de renfort en fibres de carbone ou fibres de céramique et matrice céramique, le matériau céramique constituant les fibres et/ou la matrice étant fréquemment du carbure de silicium SiC).

Des pièces en matériau composite thermostructural sont généralement fabriquées en élaborant une préforme fibreuse et en densifiant celle-ci par la matrice. Des procédés de densification bien connus sont la densification par voie liquide, qui consiste à imprégner la préforme par un précurseur de la matrice à l'état liquide puis à transformer le précurseur par traitement thermique, la densification par infiltration chimique en phase vapeur, et une combinaison de ces deux procédés. Dans ce dernier cas, la densification est réalisée d'abord par voie liquide puis par infiltration chimique en phase vapeur, ou inversement, ou encore en alternant plusieurs fois les deux procédés.

Quel que soit le procédé de densification utilisé, les pièces en matériau composite thermostructural présentent inévitablement une porosité résiduelle interne ouverte, c'est-à-dire communiquant avec l'extérieur de la pièce.

Les matériaux composites thermostructuraux trouvent des utilisations dans des domaines variés où leur propriété de conserver une très bonne tenue mécanique à des températures élevées est exploitée, notamment dans le domaine aéronautique, le domaine spatial, le domaine de la friction et le domaine nucléaire.

Dans l'aéronautique et l'espace, ces matériaux sont notamment utilisés pour des volets de réacteurs, des tuyères et des revêtements de protection d'engins spatiaux contre l'échauffement dans les couches denses de l'atmosphère. Dans le domaine de la friction, les composites C-C sont aujourd'hui couramment utilisés pour des disques de freins d'avions et leur utilisation pour des véhicules terrestres, aujourd'hui limitée à la compétition automobile en F1, doit se développer. Dans le domaine nucléaire, des briques en composite C-C ont été développées en particulier pour former des revêtements de protection de parois de chambres de confinement de plasma dans des réacteurs de fusion nucléaire.

Dans ces différentes applications, un traitement des pièces en matériaux composites thermostructural par introduction d'une composition métallique, notamment une composition à base Si, au sein de leur porosité interne résiduelle peut apporter une amélioration de leurs propriétés.

Ainsi, pour des pièces en matériau composite contenant du carbone, la siiiciuration par introduction d'une composition en fusion à base Si conduit à la formation d'une protection interne contre l'oxydation en carbure de silicium par réaction entre le carbone du matériau composite et le silicium fondu. L'amélioration de la résistance à l'oxydation des composites contenant du carbone est particulièrement importante dans les domaines aéronautique et spatial et dans le domaine de la friction. En outre, pour des disques de frein, la siliciuration apporte un comportement particulier en friction.

Dans le domaine nucléaire, la siliciuration des briques de revêtement de chambres de confinement de plasma améliore de façon significative la résistance du composite C-C à l'érosion par le plasma. En outre, la réduction de porosité qui résulte de la siliciuration limite la rétention du tritium radioactif au sein du matériau. La présence de SIC permet également de limiter l'activation neutronique.

De plus, quelle que soit l'application, l'introduction de composition à base Si entraîne une limitation de la perméabilité aux liquides et aux gaz par réduction de porosité, qu'il y ait ou non siliciuration, c'est-à-dire réaction avec du carbone contenu éventuellement dans le matériau composite.

L'invention a donc pour objet un procédé permettant d'introduire une composition en fusion à base métallique, au sein d'une pièce en matériau composite thermostructural ou, d'une façon plus générale, au sein d'une pièce ou substrat poreux.

### Etat de la technique

Plusieurs procédés visant à introduire une composition métallique en fusion, en particulier une composition à base Si, dans des pièces poreuses ont été décrits dans l'art antérieur.

Une première technique consiste à immerger la pièce dans la composition métallique en fusion, soit en introduisant la pièce dans un bain de la composition métallique à l'état fondu, soit en introduisant la pièce au sein de la composition métallique à l'état de poudre et en portant l'ensemble au-delà de la température de fusion de la composition métallique. Un tel procédé est mentionné notamment dans le document GB-A-1 457 757. Il présente plusieurs inconvénients. Ainsi, il faut disposer d'un creuset de rétention du bain suffisamment résistant en température et ne réagissant pas avec le bain. En outre, certaines pièces, notamment celles en composite C-C, risquent de flotter à la surface du bain en raison de leur différence de densité avec le bain. De plus, pour éviter une prise en bloc des pièces lors du refroidissement, il faut les extraire à chaud et, par conséquent, disposer du matériel nécessaire à cet effet.

Une deuxième technique consiste à immerger la pièce partiellement dans un bain de la composition métallique en fusion, comme évoqué dans le document US-A-3 495 939. La pénétration de la composition liquide dans tout le volume interne accessible de la pièce se fait alors par capillarité. Il est toujours nécessaire de disposer d'un creuset pour le bain et d'extraire la pièce du bain à chaud.

Afin d'éviter une immersion même partielle dans un bain, il a été proposé d'exploiter l'effet de capillarité en utilisant un drain reliant un substrat poreux à une source de composition métallique en fusion. Le drain peut notamment être formé par un tissu ou par une mèche de fibres longues reliant le substrat, éventuellement placé dans un moule, à une source de composition métallique en fusion, extérieure au substrat. Un même drain peut desservir plusieurs substrats disposés en pile. On pourra se référer par exemple aux documents US-A-4 626 516, EP-A-0 636 700 et EP-A-0519643. L'emploi de cette technique soulève des difficultés liées à la complexité du montage et à son encombrement, et à l'élimination du drain qui, après refroidissement, reste soudé à la pièce obtenue.

Une autre technique consiste à amener la composition métallique à la surface de la pièce à traiter par l'intermédiaire d'une suspension, qui est ensuite séchée, ou par dépôt ou infiltration chimique en phase vapeur, et à chauffer ensuite au-delà de la température de fusion de la composition métallique, comme décrit dans le document US-A-4 275 095. Des inconvénients résultant de l'utilisation de cette technique sont la perte importante de métal par écoulement au moment de la fusion, le risque important de collage de la pièce sur son support et la nécessité d'usinages ultérieurs du contour de la pièce. De plus, le traitement de pièces de dimensions relativement importantes dans tout leur volume peut demander plusieurs opérations successives. Dans le cas d'un apport de la composition métallique par processus de dépôt ou infiltration chimique en phase vapeur, notamment par dépôt chimique en phase vapeur de silicium à une température supérieure au point de fusion du silicium, s'ajoutent aux inconvénients précités la grande durée et le coût de ces processus.

Il a encore été proposé dans le document US-A-4 019 913 de faire réagir le matériau de la pièce à traiter avec une vapeur de métal. Pour le silicium, il est nécessaire de dépasser 2000°C, Cette technique pose le problème d'une mise en oeuvre à très haute température, et de la difficulté d'un traitement homogène. De plus, il est nécessaire de disposer d'un creuset capable de contenir du silicium à cette température.

Le document EP-A-0 093 532 enseigne la formation, sur la surface de la pièce à traiter, d'une couche d'une pâte formée de poudre de silicium en suspension dans une solution d'un liant organique additionnée de poudre de carbone ou graphite. Un traitement thermique conduit, par pyrolyse du liant, à transformer cette couche en une structure cellulaire ouverte en carbone contenant le silicium. Par siliciuration par le silicium fondu, la structure cellulaire est transformée en un squelette de carbure de silicium à pores ouverts à travers lequel le silicium fondu migre par capillarité vers la pièce à traiter. Cette solution présente l'avantage de ne laisser subsister à la surface de la pièce qu'une structure friable en carbure de silicium qui peut facilement être éliminée par brossage. Toutefois, les pièces à traiter doivent être revêtues par la pâte individuellement, par exemple avec une spatule, ce qui rend le procédé coûteux en main-d'oeuvre et difficilement industrialisable. De plus, le traitement doit être appliqué au moins en deux fois, une fois par face, ce qui provoque une hétérogénéité dans le matériau final. En effet, la partie adjacente à la face traitée en premier voit une plus grande durée de réaction avec le silicium et contient donc plus de carbure de silicium.

Enfin, il a encore été proposé dans le document GB-A-2 137 974 de siliciurer un corps vert en le plaçant entre deux sources de silicium situées au-dessus et au-dessous du corps à traiter. Chaque source de silicium comprend une brique en mousse de carbone siliciurée par infiltration de silicium fondu. La source de silicium située au-dessus est infiltrée par du silicium, tandis que celle située au-dessous repose dans un creuset contenant du silicium fondu et agit comme un drain. Ce procédé nécessite l'utilisation d'un creuset. Plusieurs corps verts peuvent être traités en même temps, en étant disposés côte à côte dans le creuset et surmontés d'une source de silicium commune ou de sources individuelles.

### Buts de l'invention

La présente invention a pour but de proposer un procédé permettant de réaliser à l'échelle industrielle l'introduction dans des substrats poreux d'une composition métallique en fusion.

En particulier, l'invention a pour but de proposer un procédé permettant de traiter simultanément plusieurs pièces de façon homogène, tout en faisant en sorte que les pièces soient facilement séparables individuellement après traitement, c'est-à-dire sans soudure entre elles ou avec des supports ou des drains.

L'invention a encore pour but de proposer un procédé permettant de faire appel à des moyens conventionnels de traitement thermique et ne nécessitant pas de creusets destinés à contenir la composition métallique en fusion.

### Définition générale et avantages de l'invention

Selon l'invention, un procédé pour l'introduction d'une composition à base métallique au sein de plusieurs substrats poreux simultanément est caractérisé par les étapes qui consistent à :
- réaliser un chargement comprenant plusieurs substrats poreux ayant chacun deux faces opposées en contact avec des couches qui constituent des sources de composition à base métallique, chaque source comprenant une première phase formée par la composition à base métallique et une deuxième phase apte à former une structure de rétention et de drainage de la composition à base métallique à l'état fondu, et
- chauffer le chargement à une température supérieure à la température de fusion de la composition à base métallique de sorte que, à partir de chaque source, la composition à base métallique à l'état fondu peut migrer, vers l'intérieur d'un substrat adjacent à travers la face adjacente de celui-ci,
et est caractérisé en ce que :
- le chargement est réalisé par un empilement vertical reposant sur un support et formé alternativement de sources de composition à base métallique et de substrats poreux, la ou chaque source située entre deux substrats consécutifs ayant des surfaces opposées en contact avec une face supérieure d'un des deux substrats et une face inférieure de l'autre des deux substrats, de sorte que la composition à base métallique contenue dans cette source peut migrer à l'état fondu vers l'intérieur des deux substrats, respectivement vers le bas et vers le haut, et
- dans chaque source de composition à base métallique, la première phase formée par la composition à base métallique est une phase majoritaire et des éléments rigides sont disposés verticalement sur toute la hauteur des intervalles entre substrats où sont logées les sources, de sorte qu'un écrasement des sources pendant le processus d'introduction de la composition à base métallique dans les substrats peut être évité.

Le procédé est notamment remarquable en ce que des sources de silicium disposées entre deux substrats superposés s'avèrent capables d'alimenter ceux-ci de façon symétrique. L'utilisation de sources de silicium fonctionnant de façon bidirectionnelle permet de traiter un nombre élevé de substrats empilés, dans les mêmes conditions et en assurant un traitement homogène dans l'ensemble du chargement.

En outre, le volume utile d'un four de traitement thermique peut être employé de façon optimale pour traiter simultanément une pluralité de substrats, aucune perte de volume utile n'étant causée par la nécessité de disposer d'une source délocalisée de composition métallique liquide comme dans certaines techniques connues.

De plus, aucun creuset de rétention n'est nécessaire et il est possible de se limiter à apporter la quantité de composition à base métallique nécessaire et suffisante pour que les substrats soient traités de la façon désirée en une seule opération. Ainsi, dans le cas notamment d'un substrat contenant du carbone, il est possible d'obtenir la conversion totale de la base métallique en carbure réfractaire correspondant.

De plus encore, aucun moyen particulier d'extraction à chaud des substrats traités n'est requis. Par un choix approprié de la phase minoritaire produisant la structure de rétention et de drainage dans la source de composition à base métallique, il est possible de faire en sorte que les pièces soient aisément séparables après traitement.

### Brève description des dessins

Des modes de mise en oeuvre de l'invention seront décrits ci-après de façon détaillée, à titre indicatif mais non limitatif. Il sera fait référence aux dessins annexés sur lesquels :
- la Figure 1 illustre un chargement de substrats poreux et sources de composition à base métallique pour la mise en oeuvre d'un mode de réalisation de l'invention,
- la Figure 2 est une vue en plan de la source de composition à base métallique dans le chargement de la Figure 1,
- les Figures 3A et 3B sont des vues de variantes de réalisation d'un chargement de substrats poreux et sources de composition à base métallique,
- les Figures 4 et 5 sont des vues partielles en élévation et en plan montrant une variante de réalisation d'une source de composition à base métallique,
- les Figures 6 et 7 sont des vues d'autres variantes de réalisation de chargements de substrats poreux et sources de composition à base métallique, et
- la Figure 8 illustre un effet de traitement selon l'invention.

### Description détaillée de modes de réalisation préférés de l'invention

Dans ce qui suit, par souci de simplification, on envisage l'introduction dans des substrats poreux d'une composition à base de silicium élémentaire métallique, ou composition à base Si, c'est-à-dire une composition formée exclusivement ou majoritairement de silicium, les éléments éventuellement ajoutés au silicium étant choisis par exemple parmi le bore, l'aluminium, le zirconium, l'hafnium, le titane, le molybdène, le tungstène, le tantale,...

Il apparaîtra immédiatement à l'homme de l'art que les procédés décrits peuvent être mis en oeuvre avec d'autres compositions à base métallique, en particulier des compositions formées exclusivement ou majoritairement d'un ou plusieurs métaux qui, comme le silicium, ont une température de fusion compatible avec les matériaux des substrats à traiter, c'est-à-dire de préférence une température de fusion inférieure à 2000°C, et sont aptes à former par réaction avec le carbone des carbures réfractaires, c'est-à-dire des carbures ayant une température de fusion supérieure à 2200°C. De tels métaux sont notamment, outre le silicium, le titane, le zirconium, l'hafnium et le vanadium.

Comme indiqué plus haut, le procédé selon l'invention peut être appliqué à différents substrats poreux, en particulier, mais non exclusivement, des substrats en matériau composite thermostructural tels que les composites C-C et les CMC, notamment les composites C-SiC (fibres de renfort en carbone et matrice en carbure de silicium) et les composites SiC-SiC (fibres de renfort et matrice essentiellement en carbure de silicium), en raison de la bonne mouillabilité du carbure de silicium par le silicium fondu. Préalablement à l'introduction de la composition à base Si à l'état fondu, la porosité résiduelle du matériau composite thermostructural pourra éventuellement être partiellement comblée par des charges incorporées par voie liquide, par exemple en suspension, et éventuellement susceptibles de réagir avec le silicium en fusion. De telles charges sont par exemple des poudres de carbone/graphite, ou d'un métal, ou de compositions réfractaires de métaux, par exemple de borures.

Dans le cas d'un matériau composite C-C, l'optimisation de son élaboration permet de faire en sorte que l'introduction de la composition à base Si à l'état fondu provoque la transformation d'une partie de la matrice carbone en carbure de silicium sans que les fibres de la texture fibreuse de renfort soient affectées.

Le procédé selon l'invention peut être mis en oeuvre sur des substrats en matériau composite de matrice carbone obtenue par voie liquide, par infiltration chimique en phase vapeur ou par une combinaison de ces deux modes de densification. Par exemple, le procédé selon l'invention peut être mis en oeuvre sur un matériau composite à matrice carbone obtenue pour partie, dans une première phase, par infiltration chimique en phase vapeur et, pour l'autre partie, dans une deuxième phase, par voie liquide. La première phase de densification permet de former sur les fibres de la texture fibreuse de renfort un revêtement continu de carbone pyrolytique non fissuré, et d'épaisseur constante, qui protège les fibres lors de l'infiltration de la composition à base Si. La deuxième phase de densification, par exemple par imprégnation et carbonisation d'une résine conduit à la formation d'un coke de résine qui se présente sous forme de grains logés dans les pores de la porosité résiduelle restante après infiltration chimique en phase vapeur. Il en résulte un accroissement de la surface spécifique du carbone susceptible de réagir avec la composition à base Si et la possibilité de fermer plus aisément la porosité par réaction entre les grains de coke de résine logés au coeur des pores et la composition à base Si.

Dans le cas d'un substrat contenant du carbone, en particulier un matériau composite à matrice carbone, le front de transformation du carbone en carbure de silicium progresse au fur et à mesure de la pénétration de la composition à base Si au sein du substrat. En contrôlant la quantité de silicium susceptible d'être fournie par la source de composition à base Si, on peut réaliser une siliciuration partielle sur une profondeur plus ou moins importante (fourniture de Si en déficit) ou faire en sorte que du silicium libre soit présent en quantité déterminée dans le substrat (fourniture de Si en excès).

Dans le cas d'un matériau CMC, notamment avec une matrice SIC, l'introduction de la composition à base Si à l'état fondu résulte simplement en un remplissage de la porosité résiduelle accessible du matériau, sans réaction particulière avec la matrice. Pour un matériau C-SIC dans lequel la matrice SiC est inévitablement fissurée par l'effet des dilatations thermiques différentielles, l'introduction de la composition à base Si est réalisée à une température telle (supérieure à 1410°C, température de fusion du silicium) que les fissures sont refermées et que le renfort fibreux en carbone est protégé du contact avec le silicium liquide. Il en est de même pour un matériau SiC-SiC dans lequel les fibres du renfort fibreux sont revêtues d'une interphase en carbone pyrolytique comme décrit dans le document EP-A-0 172 082.

On notera aussi que, dans le cas d'une matrice SiC, l'introduction de la composition à base Si peut être précédée de l'incorporation de charges, comme indiqué plus haut, ou de la formation d'un revêtement interne de carbone pyrolytique avec lequel le silicium peut réagir pour former du carbure de silicium. Le revêtement interne de carbone pyrolytique est réalisé soit par infiltration chimique en phase vapeur, soit par imprégnation-carbonisation d'une résine organique laissant un résidu carbone mouillable par le silicium, par exemple une résine phénolique, époxy ou polycarbosilane.

Différents post-traitements peuvent être réalisés après introduction de la composition à base de silicium, notamment pour éliminer ou transformer du silicium résiduel non combiné en excès dans le substrat, ou pour former des revêtements de surface.

L'invention procède du constat effectué par la déposante qu'en disposant une source de composition à base Si sous forme d'une couche intercalaire à l'état solide entre deux substrats poreux, et en élevant la température au-delà du point de fusion de cette composition, celle-ci est capable de migrer de façon sensiblement égale vers les deux substrats dès lors que la source comprend une phase apte à former une structure de rétention et de drainage. Ceci a été vérifié en particulier lorsque les substrats sont disposés l'un au-dessus de l'autre, en étant séparés par la source de composition à base Si, la composition liquide migrant alors de façon semblable au sein de l'un des substrats par gravité (vers le bas) et au sein de l'autre substrat par capillarité (vers le haut).

La source de composition à base Si comprenant une phase majoritaire constituée par la composition à base Si et une phase minoritaire apte à former une structure de rétention et de drainage peut être réalisée de différentes façons.

La phase majoritaire à base Si est de préférence sous forme finement divisée, par exemple une poudre. Elle est constituée exclusivement ou principalement de poudre de silicium additionnée éventuellement d'autres constituants, également sous forme de poudres. Ces autres constituants sont par exemple le bore, l'aluminium, le zirconium, l'hafnium, le titane, le molybdène, le tungstène, le tantale, ...

Il est envisageable d'ajouter le ou les constituants autres que le silicium non pas par mélange avec la poudre de silicium avant introduction dans le substrat, mais en les introduisant dans le substrat avant le silicium. L'introduction de ces autres constituants en poudres peut être réalisée par tout moyen connu, tel que l'imprégnation du substrat par une suspension contenant ces poudres éventuellement sous pression et/ou avec aspiration sous vide.

Ces différents constituants associés au silicium permettent d'introduire dans un substrat poreux une composition susceptible de former un alliage à base de siliciures réfractaires dont le point de fusion est supérieur à celui du silicium, ce qui permet d'augmenter la réfractarité globale du matériau ainsi traité. Le pourcentage atomique du silicium dans la composition initiale excède, de préférence largement, 50%. Ces différentes compositions peuvent aussi être choisies pour générer en final un verre, à l'issue d'un traitement ou d'une utilisation sous atmosphère oxydante, par exemple en incluant du bore.

Différentes formes de réalisation de la phase minoritaire et différents matériaux constitutifs de celle-ci peuvent être adoptés dans la mesure où elle est apte à former une structure de rétention et de drainage de la composition à base Si et, de préférence, dans la mesure où les surfaces de contact entre cette structure et les substrats sont réduites afin de faciliter autant que possible la séparation des substrats après traitement.

La phase minoritaire pourra être rigide, par exemple une structure en nid d'abeilles, ou non rigide, formant alors un réseau tridimensionnel, c'est-à-dire un réseau s'étendant dans tout le volume de la phase majoritaire. Ce réseau pourra être constitué par exemple par un feutre à forte porosité, des fibres courtes disposées de façon aléatoire, ou une mousse alvéolaire.

Le matériau constitutif de la phase minoritaire est choisi parmi les matériaux mouillables par le silicium à l'état fondu et non destructibles complètement par celui-ci, ou parmi des précurseurs aptes à être transformés en ces matériaux sous l'effet du chauffage nécessaire pour atteindre le point de fusion du silicium (1410°C environ). Typiquement, ces matériaux sont le carbone ou ses précurseurs, et le carbure de silicium ou le nitrure de silicium ou leurs précurseurs.

La source de composition à base Si est réalisée de sorte que la phase majoritaire et la phase minoritaire y soient distribuées chacune de façon aussi uniforme que possible. Le volume occupé par la phase minoritaire est choisi de préférence aussi faible que possible sans nuire aux fonctions de rétention et de drainage. A titre indicatif, le pourcentage en volume de la phase minoritaire dans la source de composition à base Si est choisi inférieur à 20 %, de préférence compris entre 0,5 % et 5 %.

L'association d'une phase majoritaire sous forme de poudre et d'une phase minoritaire sous forme de nid d'abeilles est réalisée simplement en remplissant les alvéoles de la structure en nid d'abeilles par la poudre de composition à base Si.

L'association d'une phase majoritaire sous forme de poudre et d'une phase minoritaire sous forme d'un feutre à porosité très ouverte est réalisée par exemple en imprégnant le feutre par une suspension de poudre de composition à base Si dans un véhicule liquide tel que de l'eau et en procédant à un séchage. L'imprégnation peut être réalisée en amenant la suspension d'un côté du feutre et en filtrant celle-ci du côté opposé afin de retenir la poudre au sein du feutre. Le passage de la suspension à travers le feutre peut être forcé par l'établissement d'une différence de pression entre les côtés opposés du feutre. Les fibres constitutives du feutre sont par exemple en carbone ou en carbure de silicium ou en un précurseur de ceux-ci tels qu'un composé organique (brai, viscose, cellulose,...) ou un composé organo-métallique (carbosilazane,...).

L'association d'une phase majoritaire sous forme de poudre et d'une phase minoritaire sous forme de fibres courtes ou de poudre est réalisée par mélange intime de la phase minoritaire dans une suspension de la composition à base Si, mise en forme et séchage. La mise en forme peut être réalisée par moulage permettant de donner une forme et des dimensions voulues à la source de composition à base Si se présentant sous forme d'un corps solide à insérer entre deux substrats à traiter, le moulage étant suivi d'un séchage en étuve. Les fibres ou la poudre sont en carbone ou en carbure de silicium ou en un précurseur organique ou organométallique de ceux-ci.

L'association d'une phase majoritaire sous forme de poudre et d'une phase minoritaire sous forme de mousse peut être réalisée par imprégnation d'une mousse et séchage, de la même façon qu'indiqué ci-avant pour un feutre. La mousse est par exemple en carbone ou en matière expansée précurseur du carbone, tel qu'une résine phénolique. En variante, il est possible de partir d'un mélange intime d'une suspension de la composition à base Si et d'une résine cokéfiable, par exemple une résine époxy, une résine phénolique,... Le mélange peut être moulé et chauffé de manière à provoquer la réticulation de la résine et obtenir une source de composition à base Si constituée par un corps solide ayant une forme et des dimensions prédéterminées.

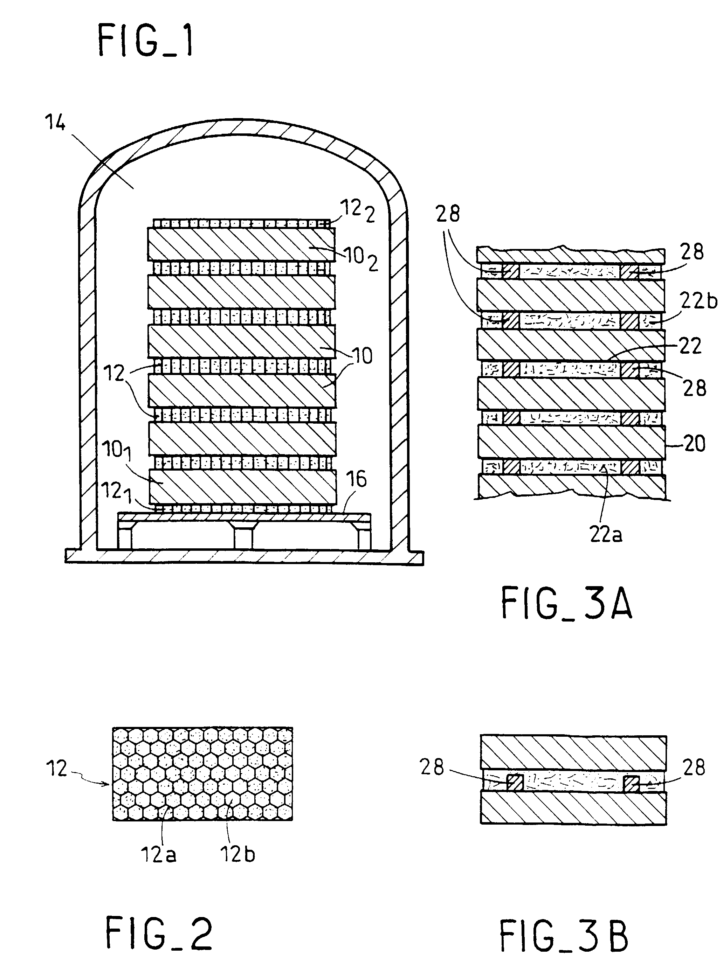

Un mode de réalisation d'un chargement comprenant des substrats poreux à traiter associés à des sources de composition à base Si est illustré par la Figure 1. Des substrats poreux semblables 10 de forme parallélépipédique sont empilés verticalement avec leurs grandes faces horizontales, en alternance avec des sources 12 d'une composition à base Si à l'état solide formant des couches intercalaires.

Dans l'exemple illustré, les couches 12 sont formées par une structure en nid d'abeilles 12a, d'épaisseur constante, qui constitue la phase minoritaire, dont les alvéoles sont remplis de la composition à base Si 12b, sous forme de poudre (Figure 2).

La structure en nid d'abeilles est réalisée par exemple en un composite C-phénolique, c'est-à-dire comprenant une structure de renfort en fibres de carbone et une matrice en résine phénolique. Pour la réalisation de la structure en nid d'abeilles, on pourra utiliser un procédé analogue à celui décrit dans le document EP-A-0 573 353.

Les parois des alvéoles de la structure en nid d'abeilles 12a sont perpendiculaires aux faces en regard des substrats 10 entre lesquels la structure 12 est disposée. La rigidité de la structure dans cette direction lui permet de remplir la fonction de séparateur entre les substrats, avec cependant une surface de contact minimale avec ceux-ci.

Le chargement ainsi réalisé est placé dans un four 14 de traitement thermique. Il repose sur un support 16 par l'intermédiaire d'une couche 12₁ faisant fonction de source de composition à base Si adjacente à la face inférieure du substrat 10₁ situé au bas de la pile. Une couche 12₂ est disposée au-dessus du chargement pour faire fonction de source de composition à base Si adjacente à la surface supérieure du substrat 10₂ situé en haut de la pile. Les couches 12₁ et 12₂ sont réalisées de la même façon que les couches intercalaires 12 mais peuvent contenir moins de composition à base Si, par exemple en ayant une épaisseur réduite, du fait qu'elles n'ont à fournir la composition à base Si que vers une face d'un substrat. Bien qu'une seule pile de substrats 10 et sources 12 soit représentée sur la Figure 1, on comprendra aisément que plusieurs piles semblables peuvent être chargées côte à côte dans le four si les dimensions de celui-ci le permettent.

Le traitement des substrats est réalisé à une température choisie supérieure à la température de fusion du silicium, mais inférieure à sa température de vaporisation, c'est-à-dire comprise entre 1410°C et 2000°C. Préférentiellement, la température de traitement est comprise entre 1410°C et 1600°C. Le traitement est effectué à pression réduite, par exemple inférieure à 0,5 bar et sous atmosphère neutre, par exemple sous argon ou sous vide.

Lorsque la composition à base Si contenue dans les couches 12 atteint son point de fusion, elle migre vers les substrats adjacents à travers leurs surfaces en contact avec les couches 12. A partir de chaque couche 12, cette migration se fait par gravité vers le substrat situé au-dessous et par capillarité vers le substrat situé au-dessus. D'une façon surprenante, comme cela ressortira des exemples donnés plus loin, la migration vers le haut est quasiment identique à la migration vers le bas. Les structures 12a en nid d'abeilles assurent à la fois la rétention de la composition liquide à base de silicium et le drainage de celle-ci pour permettre la migration par capillarité. A la fin du traitement, la fragilisation des structures 12a et leur contact très limité avec les substrats font que la séparation individuelle des substrats traités est aisée, d'autant que l'on peut faire en sorte que la quantité résiduelle de composition à base Si dans les couches 12 soit minimale. C'est en effet un des avantages du procédé que de pouvoir contrôler aisément la quantité de composition à base Si à introduire dans les substrats selon le degré de traitement à effectuer. Ce contrôle est ici réalisé par le choix du volume des alvéoles de la structure 12a, c'est-à-dire de l'épaisseur de celle-ci.

Afin de rendre la séparation des substrats traités encore plus aisée, il peut être envisagé d'appliquer préalablement un agent de démoulage sur les surfaces des structures 12a destinées à venir au contact des substrats. Un tel agent de démoulage est par exemple du graphite ou du nitrure de bore appliqués par pulvérisation d'une suspension de poudre sur les bords d'extrémité des alvéoles, suivie de séchage.

Les Figures 3A et 3B illustrent des variantes de mise en oeuvre du procédé selon l'invention.

Dans ces variantes, des substrats poreux semblables 20 de forme parallélépipédique sont empilés verticalement en altemance avec des sources 22 de composition à base Si dans lesquelles la phase minoritaire apte à former une structure de rétention et de drainage est constituée de fibres courtes 22a réparties de façon aléatoire et homogène au sein de la composition 22b à base Si. Des sources 22 sont disposées entre les substrats ainsi qu'aux extrémités inférieure et supérieure de l'empilement.

Les sources 22 sont des corps solides d'épaisseur uniforme obtenus par mélange intime des fibres courtes 22a dans une suspension de la composition à base Si sous forme de poudre éventuellement additionnée d'une faible quantité de liant organique, moulage du mélange et séchage en étuve. Les fibres 22a sont par exemple des fibres de carbone ou de carbure de silicium dont la longueur est de préférence inférieure à 10 mm. Le pourcentage en volume des fibres 22a dans les corps 22 peut être réduit sans nuire à leur capacité de constituer une structure de rétention et de drainage de la composition à base Si à l'état fondu. A titre indicatif, ce pourcentage en volume peut être inférieur à 20 %, par exemple compris entre 0,5 % et 5 %. Le liant organique éventuellement ajouté représente de préférence moins de 5 % en poids du mélange.

La structure formée par les fibres 22a ne présente pas un caractère autoportant suffisant pour résister aux efforts de compression qui s'exercent dans l'empilement pendant le traitement, alors que la composition à base Si est à l'état fondu. Aussi, le chargement est complété par des entretoises rigides disposées entre les substrats, par exemple des plots 28 placés dans des trous des corps 22. Les plots 28 ont une hauteur au plus égale à l'épaisseur des corps moulés 22 (Figure 3A), voire même légèrement inférieure (Figure 3B), afin de garantir le maintien du contact entre les substrats 20 et les sources de composition à base Si lorsque cette composition est à l'état fondu. Il est en effet nécessaire, pour assurer le drainage vers le substrat supérieur, que le contact entre les fibres 22a et la surface inférieure de ce substrat soit maintenu pendant tout le traitement. En outre, dans le mode de réalisation de la Figure 3B, l'effort de compression s'exerce exclusivement sur les corps moulés, ce qui permet de conserver à ceux-ci une épaisseur constante ; de plus, il y a contact indirect entre substrat supérieur et cales par l'intermédiaire de la source de composition à base Si qui est en contact obligatoire avec le substrat supérieur. Les plots 28 sont de préférence en un matériau relativement neutre vis-à-vis du silicium fondu, par exemple en nitrure de silicium, carbure de silicium, ou en carbone revêtu de nitrure de bore.

A la fin du traitement, les substrats peuvent aisément être séparés les uns des autres. En effet, les fibres 22a ayant subi une siliciuration sont fragiles et peuvent être éliminées par brossage. La quantité de composition à base Si introduite dans les substrats dépend du volume des sources 22 et peut donc être contrôlée aisément par le choix de l'épaisseur des corps moulés 22.

On notera qu'en variante les plots 28 peuvent être remplacés par un cadre rigide entourant le corps 22. En outre, l'utilisation d'entretoises pourra aussi être envisagée, à titre de sécurité, même lorsque la structure de rétention et de drainage est autoportante, comme dans le cas de la structure en nid d'abeilles des Figures 1 et 2.

Toujours à titre de variante, chaque source de composition à base Si adjacente à un substrat peut être réalisée sous forme modulaire en étant constituée d'une pluralité de sources élémentaires.

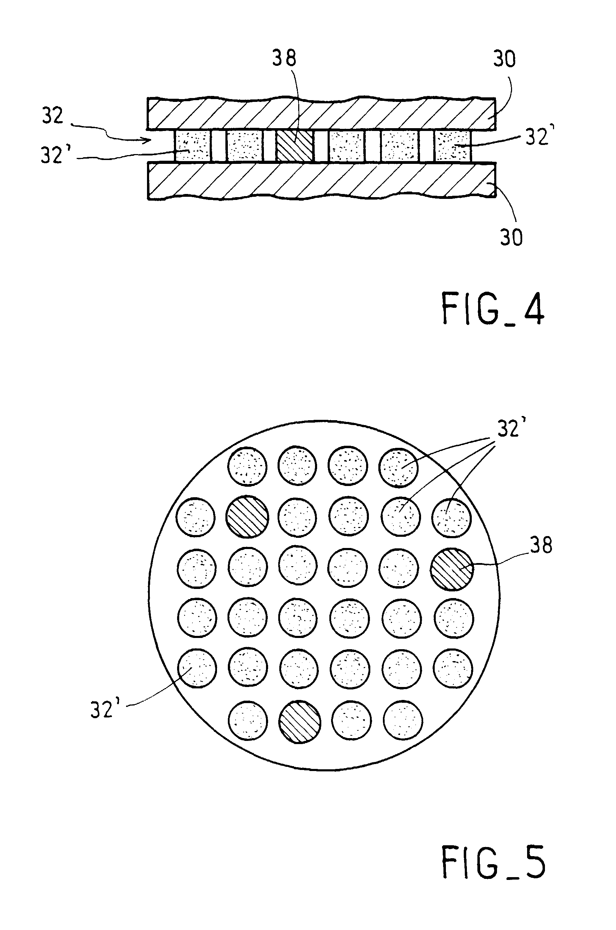

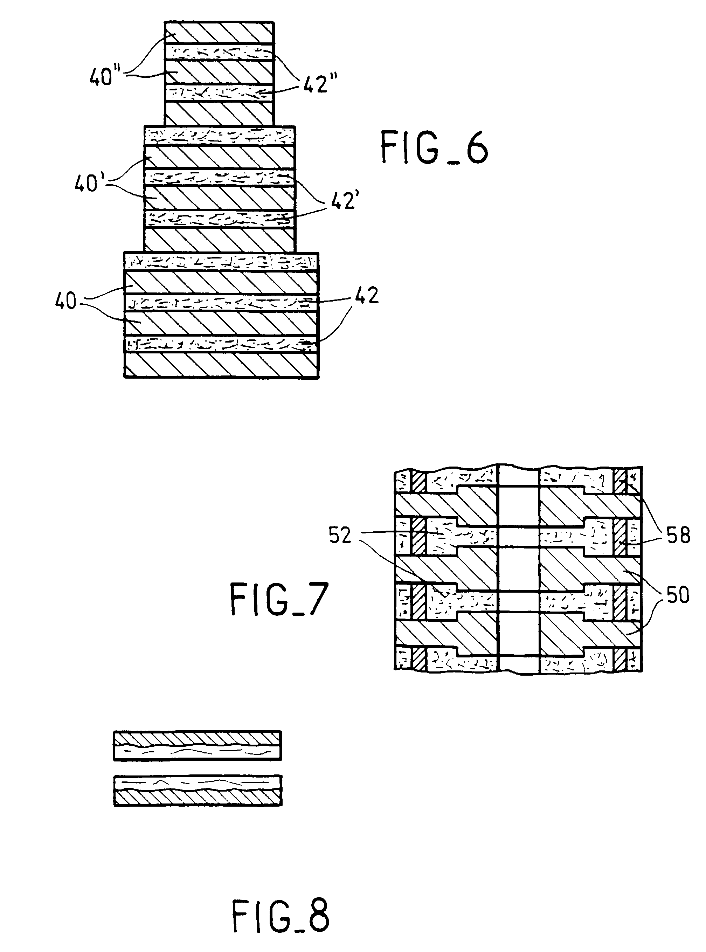

Les Figures 4 et 5 montrent ainsi une source 32 de composition à base Si formée d'une pluralité d'éléments 32' répartis dans l'intervalle entre deux substrats 30. Les éléments 32' sont par exemple des éléments cylindriques en forme de galettes et de même dimensions. Cette solution permet ainsi de constituer des sources de différentes surfaces avec des éléments standards. On notera que les sources élémentaires 32' ne sont pas nécessairement disposées côte à côte. Plusieurs plots 38 sont insérés dans l'ensemble des sources élémentaires 32', les plots 38 ayant une fonction semblable à celle des plots 28 de la Figure 3.

Dans ce qui précède, on a envisagé la formation d'empilements comprenant des substrats semblables parallélépipédiques. Le procédé peut à l'évidence être mis en oeuvre avec des substrats d'autres formes, par exemple cylindriques, annulaires,... la forme des sources de compositions à base Si interposées entre les substrats étant adaptée en conséquence.

Il n'est pas non plus nécessaire que les substrats soient tous identiques. Ainsi, des substrats de même forme extérieure mais d'épaisseurs différentes pourront être traités simultanément. La quantité de composition à base Si à introduire dans les substrats peut alors varier en fonction de l'épaisseur de ceux-ci. La quantité de composition à base Si dans les sources 22, c'est-à-dire l'épaisseur de celles-ci, est alors adaptée en conséquence en fonction des substrats adjacents.

Le fait que les substrats à traiter aient tous une même forme extérieure n'est pas non plus une nécessité. Ainsi, la Figure 6 montre un chargement comprenant, du bas vers le haut, une première série de disques 40 de même diamètre, une deuxième série de disques 40' de diamètre inférieur et une troisième série de disques 40" de diamètre encore inférieur. Les sources 42, 42', 42" de composition à base Si intercalées entre les disques ont des dimensions fonction de celles des substrats adjacents de sorte que leur diamètre soit toujours au moins égal au diamètre des deux substrats adjacents, ou au plus grand de ces deux diamètres.

On notera encore que le procédé selon l'invention peut être mis en oeuvre avec des substrats ayant des faces non planes, en choisissant pour les faces des sources de composition à base Si une forme complémentaire. Ceci est illustré par la Figure 7 qui montre un chargement comprenant des substrats annulaires 50 ayant une épaisseur plus grande dans leur partie centrale que dans leur partie périphérique. Ces substrats peuvent par exemple être des disques de frein en composite C-C.

Les sources de composition à base Si intercalées entre les substrats et placées aux extrémités de l'empilement sont constituées avantageusement de corps annulaires solides moulés à partir d'un mélange intime de fibres courtes de carbone dans une suspension de composition à base Si sous forme de poudre additionnée d'une faible quantité de liant acrylique. Les corps moulés 52 ont des faces qui présentent un relief complémentaire de celui des faces des substrats avec lesquelles elles sont en contact. Ainsi, chaque corps moulé interposé entre deux substrats présente une épaisseur plus faible dans sa partie centrale que dans sa partie périphérique. Des entretoises 58 sous forme de plots sont interposées entre les substrats afin d'éviter un écrasement des corps 52 lorsque la composition à base Si est à l'état fondu.

Dans l'exemple illustré, les corps moulés 52 sont réalisés en une seule pièce, mais ceci n'est pas une nécessité, chaque source de composition à base Si pouvant être formée d'une pluralité de sources élémentaires.

On notera enfin que si le procédé selon l'invention est mis en oeuvre de façon préférentielle avec un empilement vertical de substrats et de sources de composition à base Si, la disposition des substrats et sources dans une direction autre que verticale, par exemple suivant une rangée horizontale, n'est pas exclue.

Différents essais ont été effectués pour vérifier la capacité d'une source de composition à base Si de répartir cette composition sensiblement de façon égale dans deux substrats situés de part et d'autre de la source, en étant adjacents à celle-ci, même lorsque l'un des substrats est situé au-dessus de la source et l'autre au-dessous.

### Exemple 1

Deux échantillons parallélépipédiques en matériau composite C-C, d'épaisseur égale à 25 mm et ayant une porosité résiduelle ouverte d'environ 13% en volume, sont placés l'un au-dessus de l'autre. On interpose entre les échantillons une source de silicium constituée d'une structure en nid d'abeilles en matériau composite C-phénolique dont les alvéoles sont remplis de silicium en poudre. La structure en nid d'abeilles a une épaisseur égale à 10 mm et représente 3 % en volume de la source de silicium.

L'ensemble ainsi constitué est placé dans un four et porté à une température de 1500°C sous 10 mbar d'argon pendant 1 heure. Après refroidissement, on constate que le silicium fondu a migré aussi bien dans l'échantillon inférieur, par gravité, que dans l'échantillon supérieur, par capillarité. 93% de la masse de silicium contenue initialement dans la source de silicium ont migré dans les échantillons et, sur la quantité ayant migré, 46 % sont présents dans l'échantillon supérieur et 54 % sont présents dans l'échantillon inférieur. La séparation des échantillons traités est aisée en raison de la faible surface de contact avec le nid d'abeilles, ce demier étant pratiquement réutilisable.

Cet essai montre que, de façon insoupçonnée, il est possible de traiter simultanément, et de façon pratiquement symétrique, deux pièces situées au-dessus et au-dessous d'une source de silicium, la migration étant pratiquement aussi importante dans un sens que dans l'autre.

### Exemple 2

On procède comme dans l'Exemple 1 mais en empilant trois échantillons parallélépipédiques de matériau composite C-C intercalés avec deux sources de silicium. Les échantillons sont des blocs de 22 mm d'épaisseur ayant une porosité résiduelle ouverte de 13% en volume, tandis que les sources de silicium sont constituées de structures en nid d'abeilles de 10 mm d'épaisseur remplies de poudre de silicium.

Après refroidissement, l'empilement est sorti du four et l'on constate que les échantillons se séparent aisément des structures en nid d'abeilles qui sont vides de silicium. Les porosités résiduelles finales des échantillons inférieur, médian et supérieur sont respectivement égales à 8%, 3% et 9% en volume. En conformité avec l'observation faite dans l'Exemple 1, c'est l'échantillon du milieu qui a recueilli le plus de silicium, étant en contact avec une source de silicium sur chaque face.

### Exemple 3

On procède comme dans l'Exemple 2 mais en utilisant des sources de silicium constituées de structures en nid d'abeilles de 15 mm d'épaisseur remplies de poudre de silicium.

Les porosités résiduelles finales mesurées sont égales à 7 %, 3 % et 6 % pour les échantillons respectivement inférieur, médian et supérieur. Cet Exemple montre, en comparaison avec l'Exemple 2, qu'il est possible de faire varier la quantité de silicium introduite dans les échantillons en faisant varier l'épaisseur de la structure en nid d'abeilles, c'est-à-dire la capacité des sources de silicium.

### Exemple 4

Trois disques pleins en matériau composite C-C sont disposés les uns au-dessus des autres avec interposition, entre deux disques voisins, d'une source de silicium constituée par une structure en nid d'abeilles dont les alvéoles sont remplis de silicium. Les disques ont un diamètre de 100 mm et une épaisseur de 22 mm et la structure en nid d'abeilles une épaisseur de 15 mm. Cet empilement est placé dans un four en étant posé sur une source de silicium identique à celles intercalées dans l'empilement, une autre source de silicium semblable étant placée au-dessus de l'empilement. De la sorte, chaque disque à traiter est situé entre deux sources de silicium.

La température est portée dans le four à 1500°C pendant 1 heure sous une pression de 10 mbar d'argon. Après traitement et refroidissement, les disques peuvent facilement être séparés, de même que les structures en nid d'abeilles. Les porosités résiduelles des disques mesurées alors sont respectivement de 3 %, 2 % et 4 % du bas vers le haut de l'empilement, contre une porosité résiduelle initiale de 13 %.

Par rapport aux Exemples 2 et 3, on observe que les disques placés aux extrémités sont traités de façon sensiblement identique au disque intermédiaire, grâce à la présence de sources de silicium aux extrémités de l'empilement.

Cet exemple montre la possibilité offerte par le procédé de traiter de façon quasi uniforme une pluralité de substrats poreux empilés.

### Exemple 5

On réalise un empilement comme décrit dans l'Exemple 2 mais en remplaçant les sources de silicium avec phase minoritaire en nid d'abeilles par des corps moulés à partir d'un mélange intime de fibres de carbone dans une suspension de poudre de silicium. Les fibres de carbone, ayant une longueur moyenne de 3 mm, peuvent par exemple être des fibres de type "T300" de la société japonaise Toray. Le pourcentage en volume de fibres de carbone par rapport au silicium est d'environ 1%.

Après traitement thermique réalisé comme dans l'Exemple 2 et refroidissement, on constate qu'il ne subsiste entre les échantillons qu'une masse friable résultant de la siliciuration des fibres de carbone, ce qui permet de séparer aisément les échantillons. Un brossage modéré de leur surface permet de retrouver quasiment leur géométrie d'origine.

Les valeurs mesurées pour les porosités résiduelles des trois échantillons sont respectivement 3 %, 2 % et 5 % pour l'échantillon inférieur, l'échantillon médian et l'échantillon supérieur.

La comparaison des Exemples 2 et 5 montre que la structure tridimensionnelle constituée par les fibres courtes dispersées dans le silicium remplit les fonctions de structure de rétention et de drainage de la même façon que la structure en nid d'abeilles.

Il a par ailleurs été observé un tassement du résidu de corps moulé plus important pour celui situé à la partie inférieure de l'empilement que pour celui situé à la partie supérieure, en raison des efforts de compression plus importants exercés sur le premier. C'est la raison pour laquelle, dans le cas d'un empilement d'un plus grand nombre de pièces poreuses à traiter, il est utile de prévoir des entretoises entre les pièces comme décrit en référence à la Figure 3.

### Exemple 6

On réalise un empilement comme dans l'Exemple 2 mais en utilisant des échantillons en matériau composite C-SiC, dans lequel les fibres de carbone sont des fibres à haute résistance et la matrice SiC est obtenue par infiltration chimique en phase vapeur.

L'empilement est traité comme dans l'Exemple 2. Après traitement, les échantillons sont facilement séparables. La porosité résiduelle finale des échantillons est respectivement égale à 10 %, 7 % et 12 % en volume pour les échantillons inférieur, médian et supérieur alors qu'elle était initialement de 20 % en volume dans le matériau composite C-SiC.

Un test de rupture en flexion est réalisé sur une éprouvette provenant de l'échantillon médian et ayant comme dimensions 60x10x5 mm³. La rupture est enregistrée sous un effort de 100 daN alors qu'une éprouvette de mêmes dimensions tirée du matériau initial rompt sous 110 daN. Ceci démontre que les fibres de carbone du matériau composite C-SiC n'ont pas été dégradées par le traitement.

### Exemple 7

On réalise un empilement comme dans l'Exemple 2, mais en utilisant des échantillons en matériau composite SiC-SiC ayant un renfort fibreux en fibres à base de carbure de silicium, commercialisées sous la dénomination "NICALON" ® par la société japonaise Nippon Carbon, et une matrice SiC obtenue par infiltration chimique en phase vapeur. Les échantillons ont une porosité résiduelle initiale de 5% et une épaisseur de 4 mm tandis que les sources de silicium comprennent une structure en nid d'abeilles de 6 mm d'épaisseur.

Après traitement et séparation des pièces, la porosité de l'échantillon médian n'est plus mesurable (bien inférieure à 1%).

Un test de rupture en traction est réalisé sur une éprouvette tirée de l'échantillon médian. On obtient une contrainte à rupture de 185 MPa pour le matériau traité au lieu de 250 MPa pour le matériau SiC-SiC initial. Le mode de rupture reste non fragile. Malgré la température élevée du traitement, la résistance du matériau a été peu dégradée.

Les Exemples 6 et 7 montrent que le procédé peut être mis en oeuvre non seulement avec des substrats en carbone, mais aussi avec des substrats en un matériau mouillable par le silicium, autre que le carbone, notamment SiC.

En outre, l'Exemple 7 montre que le procédé selon l'invention peut être utilisé dans un but d'étanchéification d'un matériau poreux, en ajustant la quantité de composition à base Si disponible.

### Exemple 8

On réalise un essai comparable à celui de l'Exemple 6 avec des échantillons en un matériau C-SiC de porosité résiduelle initiale égale à 20%.

Toutefois, avant de réaliser l'empilement et le traitement, on imprègne les échantillons par une résine phénolique qui est polymérisée et carbonisée, la porosité du matériau étant alors ramenée à 14 %.

Après traitement, on constate que l'échantillon médian présente une porosité résiduelle de 4%.

Cet exemple montre que l'on peut traiter selon le procédé des matériaux composites à matrice mixte, en l'espèce une matrice SiC/C, dès lors que l'un des constituants de la matrice est mouillable par le silicium fondu.

### Exemple 9

On réalise un essai semblable à celui de l'Exemple 4 si ce n'est qu'à la place du silicium on utilise une composition à base Si constituée de silicium et de bore, ce dernier représentant 8% atomique dans la composition. Un tel alliage est connu. Son point de fusion est 1385°C.

Après traitement, les porosités résiduelles des disques sont égales respectivement à 3 %, 2 % et 3 % en partant du bas de l'empilement.

Cet exemple montre que le procédé peut être mis en oeuvre avec des compositions autres que le silicium pur mais dans lesquelles le silicium est un constituant majoritaire. L'utilisation d'un système Si+B permet d'améliorer la résistance à l'oxydation du matériau C-C ainsi traité car engendre la formation d'un verre borosilicaté ayant des propriétés cicatrisantes, au lieu d'une couche fragile de silice. Par propriété cicatrisante, on entend ici la faculté de colmater des fissures par passage à l'état pâteux à la température d'utilisation du matériau.

### Exemple 10

On réalise un essai semblable à celui de l'Exemple 4 mais en remplaçant chaque disque en matériau composite C-C par deux disques accolés d'épaisseur 10 mm et en utilisant pour les sources de silicium des phases minoritaires sous forme de structure en nid d'abeilles de 4 mm d'épaisseur. Afin de faciliter leur séparation ultérieure, les deux disques de chaque paire de disques accolés sont séparés par une mince feuille de graphite expansé recomprimé tel que fourni sous la dénomination "SIGRAFLEX" ® par la société allemande SIGRI GmbH.

Après traitement, les échantillons sont séparés, sectionnés transversalement et oxydés à l'air à 800°C afin de révéler les zones siliciurées qui résistent à l'oxydation. Dans une paire de disques initialement accolés dans l'empilement, les zones siliciurées apparaissent comme montré dans les parties hachurées de la Figure 8. On observe que les deux disques sont partiellement siliciurés, celui initialement placé au-dessus étant siliciuré par la face supérieure de celui place au-dessous par la face inférieure.

Cet exemple montre que le procédé peut être utilisé pour réaliser un traitement local et contrôlé de plusieurs pièces au cours d'un même cycle.

On notera en outre qu'un accès localisé à certaines parties de surface des substrats peut être réalisé par exemple en masquant les autres parties de surface au moyen d'une barrière étanche résistant au silicium fondu, interposée entre la source de composition à base Si et le substrat. Ceci permet de laisser subsister des parties de surface vierges pour éviter par exemple la nécessité de leur ré-usinage après traitement. La barrière peut être constituée de feuilles de graphite expansé recomprimé ou d'une couche de nitrure de bore. Il est envisageable aussi d'utiliser des sources de composition à base Si très localisées, c'est-à-dire ne couvrant pas uniformément toute la surface des substrats à traiter, que ce soit de façon continue ou discrète.

### Exemple 11

On réalise l'empilement illustré par la Figure 4 avec des disques de frein annulaires en composite C-C ayant un diamètre extérieur de 400 mm, un diamètre intérieur de 250 mm, une épaisseur de 40 mm dans la partie centrale et une épaisseur de 30 mm dans la partie périphérique. Les sources de silicium sont des corps moulés à partir d'un mélange de poudre de silicium à raison de 95% en volume, de fibres courtes de carbone à raison de 1% en volume et de liant acrylique à raison de 4% en volume.

La porosité résiduelle ouverte des disques est initialement de 13 % en volume et les sources de silicium sont dimensionnées pour contenir approximativement 2,2 fois la quantité nécessaire pour obturer complètement cette porosité.

Le traitement thermique est effectué à 1550°C pendant 1 heure sous 80 mbar d'argon.

Après traitement, on constate que les disques sont facilement séparables et qu'un brossage modéré de leurs faces permet de retrouver leur géométrie initiale.

Après section des disques et oxydation sous air à 800°C dans le but de révéler les zones siliciurées, on constate que le matériau C-C a été siliciuré de façon homogène dans tout son volume.

### Exemple 12

On réalise l'empilement illustré par la figure 4 avec des disques de frein annulaires en matériau composite C-C obtenu par densification d'une structure fibreuse de renfort successivement par infiltration chimique en phase vapeur, donnant une première phase de matrice en carbone pyrolytique, et par voie liquide à partir d'une résine phénolique, donnant une deuxième phase de matrice en coke de résine. Les disques ont un diamètre extérieur de 400 mm, un diamètre intérieur de 250 mm, une épaisseur de 40 mm dans la partie centrale et une épaisseur de 30 mm dans la partie périphérique et présentent une porosité résiduelle de 23 % en volume.

Les sources de silicium sont des corps moulés à partir d'un mélange de poudre de silicium à raison de 95 % en volume, de fibres courtes de carbone à raison de 1 % en volume et de liant acrylique à raison de 4 % en volume. Les sources sont dimensionnées de manière à contenir approximativement 1,5 fois la quantité nécessaire pour obturer complètement la porosité résiduelle initiale des substrats.

Le traitement thermique est effectué à 1550°C pendant 1 heure sous 80 mbar d'argon.

Après traitement, on constate que les disques sont facilement séparables et qu'un brossage modéré de leurs faces permet de retrouver leur géométrie initiale.

Après section des disques et oxydation sous air à 800°C dans le but de révéler les zones siliciurées, on constate que le matériau C-C a été siliciuré de façon homogène dans tout son volume.

### Exemple 13

On réalise l'empilement illustré par la figure 4 avec des échantillons en matériau composite C-C dont la matrice carbone est obtenue par infiltration chimique en phase vapeur. Les échantillons ont une épaisseur de 30 mm et une porosité résiduelle initiale de 10 % en volume.

Les sources de silicium sont des corps moulés à partir d'un mélange de poudre de silicium à raison de 95% en volume, de fibres courtes de carbone à raison de 1 % en volume et de liant acrylique à raison de 4 % en volume. Les sources sont dimensionnées de manière à contenir approximativement 1,5 fois la quantité nécessaire pour obturer complètement la porosité résiduelle initial des substrats.

Le traitement thermique est effectué à 1550°C pendant 1 h sous 80 mbar d'argon.

Afin de supprimer la présence de silicium libre dans les échantillons siliciurés, un post-traitement est réalisé pour transformer ce silicium libre en carbure de silicium. Cette transformation du silicium libre est réalisée à 1300°C sous 80 mbar d'argon enrichi de 2 % en volume de méthane.

Après ce post-traitement, la porosité résiduelle finale des pièces est inférieure à 4%.

Après section des pièces et oxydation à 800°C sous air pendant 24 h pour éliminer le carbone, un traitement thermique est effectué à 1800°C sous vide secondaire, conditions dans lesquelles il est connu que le silicium s'évapore. Comme la masse des pièces ne varie pas, on en déduit qu'il ne subsiste plus de silicium libre après post-traitement.

Cet exemple montre la possibilité d'obtenir des pièces en composite C-C siliciuré, contenant une quantité substantielle de SiC provenant de la transformation de silicium libre, donc sans attaque trop importante de la matrice en carbone pyrolytique et des fibres en carbone de la structure fibreuse de renfort, présentant une porosité résiduelle faible et dépourvue de silicium libre.

De telles pièces trouvent une application avantageuse dans le domaine nucléaire pour former des revêtements de protection de paroi de chambre de confinement de plasma dans des réacteurs de fusion nucléaire.

En effet, la présence de carbure de silicium en quantité substantielle améliore la résistance à l'érosion, et donc la durée de vie, sans que cela résulte d'une transformation massive de la matrice en carbone pyrolytique et des fibres en carbone, qui serait préjudiciable à la conductivité thermique des pièces. En outre, l'absence de silicium libre évite une pollution du plasma en cas de fonctionnement à une température supérieure à la température de fusion du silicium. Enfin, la faible porosité résiduelle limite la possibilité de rétention du tritium radioactif.

## Revendications

1. Procédé pour l'introduction d'une composition métallique au sein de plusieurs substrats poreux simultanément, comportant les étapes consistant à :
- réaliser un chargement comprenant plusieurs substrats poreux ayant chacun deux faces opposées en contact avec des couches qui constituent des sources de composition à base métallique, chaque source comprenant une première phase formée par la composition à base métallique et une deuxième phase apte à former une structure de rétention et de drainage de la composition à base métallique à l'état fondu, et
- chauffer le chargement à une température supérieure à la température de fusion de la composition à base métallique de sorte que, à partir de chaque source, la composition à base métallique à l'état fondu peut migrer, vers l'intérieur d'un substrat adjacent à travers la face adjacente de celui-ci,
caractérisé en ce que :
- le chargement est réalisé par un empilement vertical reposant sur un support et formé alternativement de sources de composition à base métallique et de substrats poreux, la ou chaque source située entre deux substrats consécutifs ayant des surfaces opposées en contact avec une face supérieure d'un des deux substrats et une face inférieure de l'autre des deux substrats, de sorte que la composition à base métallique contenue dans cette source peut migrer à l'état fondu vers l'intérieur des deux substrats, respectivement vers le bas et vers le haut, et
- dans chaque source de composition à base métallique, la première phase formée par la composition à base métallique est une phase majoritaire et des éléments rigides sont disposés verticalement sur toute la hauteur des intervalles entre substrats où sont logées les sources, de sorte qu'un écrasement des sources pendant le processus d'introduction de la composition à base métallique dans les substrats peut être évité.

2. Procédé selon la revendication 1, caractérisé en ce que la phase minoritaire utilisée pour réaliser une source de composition à base métallique est une structure alvéolaire rigide, ayant des éléments de parois rigides s'étendant entre ses surfaces opposées.

3. Procédé selon la revendication 2, caractérisé en ce que la phase minoritaire est une structure en nid d'abeilles.

4. Procédé selon l'une quelconque des revendications 2 et 3, caractérisé en ce que l'on réalise les sources de composition à base métallique en remplissant les alvéoles de la phase minoritaire par la composition à base métallique sous forme de poudre.

5. Procédé selon la revendication 1, caractérisé en ce que la phase minoritaire utilisée pour réaliser la source de composition à base métallique constitue un réseau tridimensionnel déformable, et des entretoises rigides sont disposées dans les intervalles entre substrats.

6. Procédé selon la revendication 5, caractérisé en ce que la phase minoritaire est formée d'éléments divisés formant le réseau tridimensionnel et répartis dans la composition à base métallique.

7. Procédé selon la revendication 6, caractérisé en ce que les éléments divisés représentent de préférence moins de 20% en volume dans la source de composition à base métallique.

8. Procédé selon l'une quelconque des revendications 6 et 7, caractérisé en ce que le réseau tridimensionnel est formé de fibres.

9. Procédé selon la revendication 8, caractérisé en ce que le réseau tridimensionnel est formé de fibres courtes.

10. Procédé selon l'une quelconque des revendications 6 à 9, caractérisé en ce que la source de composition à base métallique est réalisée par mélange des éléments sous forme divisée dans une suspension de la composition à base métallique sous forme de poudre.

11. Procédé selon la revendication 10, caractérisé en ce que le mélange comprend en outre un liant organique.

12. Procédé selon la revendication 11, caractérisé en ce que le liant organique représente moins de 5% en poids du mélange.

13. Procédé selon l'une quelconque des revendications 1 à 12, caractérisé en ce que chaque couche constituant une source de composition à base métallique est constituée d'une pluralité de sources élémentaires.

14. Procédé selon l'une quelconque des revendications 5 à 13, caractérisé en ce que les sources de composition à base métallique sont réalisées sous forme de corps moulés.

15. Procédé selon la revendication 14, caractérisé en ce que l'on confère aux faces des corps moulés, destinées à venir au contact des substrats, des formes complémentaires de celles des faces adjacentes des substrats dans le chargement.

16. Procédé selon l'une quelconque des revendications 1 à 15, caractérisé en ce que la phase minoritaire est en un matériau choisi parmi le carbone, le carbure de silicium, le nitrure de silicium et des précurseurs du carbone, du carbure de silicium et du nitrure de silicium aptes à être transformés en carbone, carbure de silicium ou nitrure de silicium lors de l'étape de chauffage.

17. Procédé selon l'une quelconque des revendications 1 à 16, caractérisé en ce que la composition à base métallique comprend un ou plusieurs métaux choisis parmi le silicium, le titane, le zirconium, l'hafnium et le vanadium.

18. Procédé selon la revendication 17, caractérisé en ce que la composition à base métallique est une composition à base de silicium qui comprend plus de 50% atomique de silicium, le reste étant constitué par l'un au moins des éléments comprenant le bore, l'aluminium, le zirconium, l'hafnium, le titane, le molybdène, le tungstène et le tantale.

19. Procédé selon la revendication 18, pour le traitement de siliciuration de substrats poreux contenant du carbone.

20. Procédé selon la revendication 19, caractérisé en ce que les substrats poreux sont en matériau composite carbone-carbone.

21. Procédé selon la revendication 20, caractérisé en ce que les substrats poreux sont des disques de frein annulaires.

22. Procédé selon l'une quelconque des revendications 20 et 21, caractérisé en ce que les substrats poreux sont en matériau composite carbone-carbone ayant une matrice carbone comprenant une première phase de matrice constituée par du carbone pyrolytique obtenu par infiltration chimique en phase vapeur et une deuxième phase de matrice constituée par du coke de résine.

23. Procédé selon l'une quelconque des revendications 19 à 21, caractérisé en ce que l'on réalise un post-traitement de transformation de silicium libre résiduel dans les substrats siliciurés.

24. Procédé selon la revendication 23, caractérisé en ce que le post-traitement est réalisé en présence de méthane.

## Patentansprüche

1. Verfahren zum Einbringen einer metallischen Zusammensetzung im Inneren von mehreren porösen Substraten gleichzeitig, wobei das Verfahren die folgenden Schritte aufweist:
- Durchführen einer Beschickung, die mehrere poröse Substrate aufweist, von denen jedes zwei einander entgegengesetzte Seiten in Berührung mit Schichten aufweist, die Quellen der Zusammensetzung auf metallischer Basis bilden, wobei jede Quelle eine erste Phase, die durch die Zusammensetzung auf metallischer Basis gebildet ist, und eine zweite Phase aufweist, die dazu befähigt ist, um eine Struktur der Retention und der Drainage der Zusammensetzung auf metallischer Basis in dem geschmolzenen Zustand zu bilden, und
- Erwärmen der Beschickung auf eine Temperatur oberhalb der Schmelztemperatur der Zusammensetzung auf metallischer Basis, derart, daß von jeder Quelle ausgehend die Zusammensetzung auf metallischer Basis in dem geschmolzenen Zustand in Richtung zu dem Inneren eines benachbarten Substrats quer durch dessen benachbarte Seite wandern kann,
dadurch gekennzeichnet, daß:
- die Beschickung durch eine vertikale Stapelung durchgeführt wird, die auf einer Abstützung ruht und abwechselnd aus Quellen der Zusammensetzung auf metallischer Basis und porösen Substraten gebildet wird, wobei die oder jede Quelle, die zwischen zwei aufeinanderfolgenden Substraten angeordnet ist, entgegengesetzte Seiten und zwar je eine in Berührung mit einer oberen Seite des einen der zwei Substrate bzw. mit einer unteren Seite des anderen der zwei Substrate aufweist, derart, daß die in dieser Quelle enthaltene Zusammensetzung auf metallischer Basis in dem geschmolzenen Zustand in Richtung zu dem Inneren der zwei Substrate nach unten bzw. nach oben wandern kann, und
- in jeder Quelle der Zusammensetzung auf metallischer Basis die erste Phase, die durch die Zusammensetzung auf metallischer Basis gebildet ist, eine Majoritäts-Phase ist und starre Elemente vertikal über die gesamte Höhe von Zwischenräumen zwischen Substraten angeordnet sind, wo die Quellen untergebracht sind, so daß eine Zusammendrückung der Quellen während des Verfahrens des Einbringens der Zusammensetzung auf metallischer Basis in die Substrate vermieden werden kann.

2. Verfahren nach Anspruch 1, dadurch gekennzeichnet, daß die Minoritäts-Phase, die dazu verwendet wird, um eine Quelle der Zusammensetzung auf metallischer Basis zu bilden, eine starre, wabenförmige Struktur ist, die starre Wandelemente aufweist, die sich zwischen den entgegengesetzten Seiten der Struktur erstrecken.

3. Verfahren nach Anspruch 2, dadurch gekennzeichnet, daß die Minoritäts-Phase eine Bienenwabenstruktur ist.

4. Verfahren nach einem der Ansprüche 2 und 3, dadurch gekennzeichnet, daß man die Quellen der Zusammensetzung auf metallischer Basis dadurch bildet, daß die Waben der Minoritäts-Phase durch die Zusammensetzung auf metallischer Basis in Form eines Pulvers gefüllt werden.

5. Verfahren nach Anspruch 1, dadurch gekennzeichnet, daß die Minoritäts-Phase, die dazu verwendet wird, um die Quelle der Zusammensetzung auf metallischer Basis zu bilden, ein dreidimensionales, verformbares Netz bildet und daß starre Abstandselemente in den Zwischenräumen zwischen Substraten angeordnet sind.

6. Verfahren nach Anspruch 5, dadurch gekennzeichnet, daß die Minoritäts-Phase durch Elemente gebildet ist, die geteilt sind, um das dreidimensionale Netz zu bilden, und die in der Zusammensetzung auf metallischer Basis verteilt sind.

7. Verfahren nach Anspruch 6, dadurch gekennzeichnet, daß die geteilten Elemente vorzugsweise weniger als 20 Volumen% in der Quelle der Zusammensetzung auf metallischer Basis bilden.

8. Verfahren nach einem der Ansprüche 6 und 7, dadurch gekennzeichnet, daß das dreidimensionale Netz aus Fasern gebildet ist.

9. Verfahren nach Anspruch 8, dadurch gekennzeichnet, daß das dreidimensionale Netz aus Kurzfasern gebildet ist.

10. Verfahren nach einem der Ansprüche 6 bis 9, dadurch gekennzeichnet, daß die Quelle der Zusammensetzung auf metallischer Basis durch eine Mischung von Elementen in Art einer Verteilung in einer Suspension der pulverförmigen Zusammensetzung auf metallischer Basis gebildet ist.

11. Verfahren nach Anspruch 10, dadurch gekennzeichnet, daß die Mischung darüberhinaus einen organischen Binder aufweist.

12. Verfahren nach Anspruch 11, dadurch gekennzeichnet, daß der organische Binder weniger als 5 Gew. % der Mischung darstellt.

13. Verfahren nach einem der Ansprüche 1 bis 12, dadurch gekennzeichnet, daß jede eine Quelle der Zusammensetzung auf metallischer Basis bildende Schicht durch eine Mehrzahl elementarer Quellen gebildet ist.

14. Verfahren nach einem der Ansprüche 5 bis 13, dadurch gekennzeichnet, daß die Quellen der Zusammensetzung auf metallischer Basis in Gestalt von geformten Körpern gebildet sind.

15. Verfahren nach Anspruch 14, dadurch gekennzeichnet, daß man den Seiten der geformten Körper, wobei diese Seiten dazu bestimmt sind, in Berührung mit den Substraten zu kommen, Gestalten verleiht, die zu denjenigen benachbarter Seiten der Substrate in der Beschickung komplementär sind.

16. Verfahren nach einem der Ansprüche 1 bis 15, dadurch gekennzeichnet, daß die Minoritäts-Phase aus einem Material besteht, das unter Kohlenstoff, Siliziumkarbid, Siliziumnitrid und Vorläufern von Kohlenstoff, Siliziumkarbid und Siliziumnitrid ausgewählt ist, wobei diese Vorläufer dazu befähigt sind, in Kohlenstoff, Siliziumkarbid oder Siliziumnitrid während des Schrittes der Erwärmung umgewandelt zu werden.

17. Verfahren nach einem der Ansprüche 1 bis 16, dadurch gekennzeichnet, daß die Zusammensetzung auf metallischer Basis ein oder mehrere Metalle aufweist, die unter Silizium, Titan, Zirkonium, Hafnium und Vanadium ausgewählt sind.

18. Verfahren nach Anspruch 17, dadurch gekennzeichnet, daß die Zusammensetzung auf metallischer Basis eine Zusammensetzung auf Basis von Silizium ist, wobei diese Zusammensetzung mehr als 50 Atom% von Silizium aufweist und wobei der Rest durch mindestens eines von Elementen gebildet wird, die Bor, Aluminium, Zirkonium, Hafnium, Titan, Molybdän, Wolfram und Tantal aufweisen.

19. Verfahren nach Anspruch 18 für die Silizierungsbehandlung von porösen Substraten, die Kohlenstoff enthalten.

20. Verfahren nach Anspruch 19, dadurch gekennzeichnet, daß die porösen Substrate aus Verbundwerkstoff Kohlenstoff-Kohlenstoff bestehen.

21. Verfahren nach Anspruch 20, dadurch gekennzeichnet, daß die porösen Substrate ringförmige Bremsscheiben sind.

22. Verfahren nach einem der Ansprüche 20 und 21, dadurch gekennzeichnet, daß die porösen Substrate aus Verbundwerkstoff Kohlenstoff-Kohlenstoff bestehen, der eine Kohlenstoffmatrix aufweist, die eine erste Matrixphase, die durch pyrolytischen Kohlenstoff gebildet ist, der durch chemische Infiltration in der Dampfphase erhalten wird, und eine zweite Matrixphase aufweist, die durch Harzkoks gebildet ist.

23. Verfahren nach einem der Ansprüche 19 bis 21, dadurch gekennzeichnet, daß man eine Nachbehandlung zur Umwandlung des freien Restsiliziums in den silizierten Substraten durchführt.

24. Verfahren nach Anspruch 23, dadurch gekennzeichnet, daß die Nachbehandlung in Anwesenheit von Methan durchgeführt wird.

## Claims

1. A method of incorporating a metal-based composition simultaneously in a plurality of porous substrates, the method comprising the steps consisting in:
- making one batch comprising a plurality of porous substrates each of which has two opposite faces in contact with layers constituting sources of metal-based composition, each source comprising a first phase formed by the metal-based composition and a second phase suitable for forming a retention and drainage structure for the metal-based composition in the molten state; and
- heating the batch to a temperature higher than the melting temperature of the metal-based composition so that, from each source, the metal-based composition in the molten state can migrate, towards the inside of an adjacent substrate through the adjacent surface thereof;
characterized in that:
- the batch is made by a vertical stack resting on a support and formed of alternating sources of metal-based composition and of porous substrates, the or each source situated between two successive supports having opposite surfaces in contact with an upper face of one of the two substrates and a lower face of the other of the two substrates, such that the metal-based composition contained in said source may migrate in the molten state towards the inside of the two substrates, upwards and downwards respectively; and
- in each source of the metal-based composition, the first phase formed by the metal-based composition is a majority phase and rigid elements are disposed vertically throughout the height of the gaps between the substrates where the sources are housed, whereby the sources are prevented from being crushed when the metal-based composition is being introduced in the substrates.

2. A method according to claim 1, characterized in that the minority phase used for making the source of the metal-based composition is a rigid cellular structure, having rigid wall elements extending between its opposite surfaces.

3. A method according to claim 2, characterized in that the minority phase is a honeycomb structure.

4. A method according to claim 2 or 3, characterized in that the sources of metal-based composition are made by filling the cells of the minority phase with the metal-based composition in powder form.

5. A method according to claim 1, characterized in that the minority phase used for making the source of metal-based composition constitutes a deformable three-dimensional array, and rigid spacers are disposed in the gaps between the substrates.

6. A method according to claim 5, characterized in that the minority phase is made up of divided elements forming the three-dimensional array and distributed through the metal-based composition.

7. A method according to claim 6, characterized in that the divided elements preferably represent less than 20% by volume in the source of metal-based composition.

8. A method according to claim 6 or 7, characterized in that the three-dimensional array is formed of fibers.

9. A method according to claim 8, characterized in that the three-dimensional array is formed of short fibers.

10. A method according to any one of claims 6 to 9, characterized in that the source of metal-based composition is made by mixing elements in divided form in a suspension of the metal-based composition in powder form.

11. A method according to claim 10, characterized in that the mixture further comprises an organic binder.

12. A method according to claim 11, characterized in that the organic binder represents less than 5% by weight of the mixture.

13. A method according to any one of claims 1 to 12, characterized in that each layer constituting a source of metal-based composition is constituted by a plurality of unit sources.

14. A method according to any one of claims 5 to 13, characterized in that the sources of metal-based composition are made in the form of molded bodies.

15. A method according to claim 14, characterized in that the faces of the molded bodies that are to come into contact with the substrates are given shapes that are complementary to the shapes of the adjacent faces of the substrates in the batch.

16. A method according to any one of claims 1 to 15, characterized in that the minority phase is of a material selected from carbon, silicon carbide, silicon nitride, and precursors of carbon, silicon carbide, and of silicon nitride suitable for being transformed into carbon, silicon carbide, or silicon nitride during the heating step.

17. A method according to any one of claims 1 to 16, characterized in that the metal-based composition comprises one or more metals selected from silicon, titanium, zirconium, hafnium, and vanadium.

18. A method according to claim 17, characterized in that the metal-based composition is a silicon-based composition comprising more than 50% silicon atoms, the remainder being constituted by at least one of the elements comprising: boron, aluminum, zirconium, hafnium, titanium, molybdenum, tungsten, and tantalum.

19. A method according to claim 18, for the siliciding treatment of porous substrates containing carbon.

20. A method according to claim 19, characterized in that the porous substrates are of carbon-carbon composite material.

21. A method according to claim 20, characterized in that the porous substrates are annular brake disks.

22. A method according to claim 20 or 21, characterized in that the porous substrates are of carbon-carbon composite material having a carbon matrix comprising a first matrix phase constituted by pyrolytic carbon obtained by chemical vapor infiltration and a second matrix phase constituted by resin coke.

23. A method according to any one of claims 19 to 21, characterized in that post-treatment is performed to transform residual free silicon in the silicided substrates.

24. A method according to claim 23, characterized in that the post-treatment is performed in the presence of methane.
